# EUROPEAN PATENT APPLICATION

(11) **EP 2 882 173 A1**
(43) Date of publication of application: **10.06.2015**
(21) Application number: 13306668.8
(22) Date of filing: 05.12.2013
(51) Int. Cl.: H04M 1/725, G06F 3/0481

(54) **Computing device for displaying a set of application icons**

(71) Applicant: ALCATEL LUCENT, 92100 Boulogne-Billancourt (FR)
(72) Inventor: Lievens, Sammy, 2018 Antwerpen (BE); Van Den Broeck, Marc, 2018 Antwerpen (BE); Slabbinck, Tom, 2018 Antwerpen (BE)
(74) Representative: ALU Antw Patent Attorneys

(57) **Abstract**

The present invention relates to a Computing Device for displaying a set of application icons included in a user interface of said computing device. The user interface comprising a first set of application icons of a plurality of application icons, each application icon of said plurality of application icons corresponding to an application being executable by said computing device. The computing device comprises a context information management means that is configured to retrieve context information on said computing device and/or on said user of said computing device and a processing means, that is configured to determine in function of said context information, a momentary relevance of each application of a plurality of applications executable by said computing device and a User interface means that is configured to generate said set of applications icons for display, from said plurality of applications icons in function of said momentary relevance of each application of said plurality of applications.

## Description

### FIELD OF THE INVENTION

The present invention relates to the field of interactive computing devices such as personal computers, smart phones, tablet computers etc. In particular, the present invention relates to a method and related device for displaying application icons on a display of such interactive computing device.

### TECHNICAL BACKGROUND OF THE INVENTION

Current computing devices such as smart-phones and tablet devices personal computers etc. display their application icons on tabbed screens, e.g. Android devices or placed into different subfolders which the user can manage, e.g. IOS devices. In the case of Android devices currently 2 tabs are used, showing respectively all application icons and application- icons of frequently used applications. In the IOS case the user is responsible for managing the individual application icons and grouping icons of similar applications (e.g. games or social applications) into designated folders.

With mobile applications as an incredibly fast growing industry, screen layouts are getting more and more filled and unclear to the user.

Hence, computing devices such as smart-phones and tablet computers personal computers etc. run applications which applications are presented at the screen and divided over one or more screens, and or folders and are statically presented.

This manner of presenting such application-icons at the screen is unclear and moreover not convenient for finding back desired applications in a swift manner.

### SUMMARY OF THE INVENTION

An objective of the present invention is to provide with a computing device for displaying a set of application icons but wherein the aforementioned shortcoming or drawbacks of the known solutions are alleviated or overcome.

Accordingly, embodiments of the present invention relate to a Computing Device for displaying a set of application icons included in a user interface of said computing device, said user interface comprising a first set of application icons of a plurality of application icons, each application icon of said plurality of application icons corresponding to an application being executable by said computing device, where said computing device comprises:
- context information management means, configured to retrieve context information on said computing device and/or on said user of said computing device; and
- processing means, configured to determine in function of said context information, a momentary relevance of each application of a plurality of applications executable by said computing device; and
- User interface means, configured to generate said set of applications icons for display, from said plurality of applications icons in function of said momentary relevance of each application of said plurality of applications.

Correspondingly, embodiments of the invention relate to a method for displaying a set of application icons included in a user interface of a computing device, said user interface comprising said set of application icons of a plurality of application icons, each application icon of said plurality of application icons corresponding to an application being executable by said computing device, where said method comprises the steps of:
- retrieving context information on said computing device and/or on context information of said user of said computing device; and
- determining in function of said context information, a momentary relevance of each application of a plurality of applications executable by said computing device; and
- generating said set of application icons for display, from said plurality of applications icons in function of said momentary relevance of each application of said plurality of applications.

In this way, by, first retrieving context information on said computing device and/or context information on said user of said computing device CD, followed by determining, in function of said context information retrieved, a momentary relevance of each application of a plurality of applications that is executable by said computing device and generating said set of applications icons for display, from said plurality of applications icons in function of said momentary relevance of each application of said plurality of applications.

The context information retrieved may include:
- Context information on the computing device CD , such as the GPS location, information on the accelerometer, compass or the smart device's clock; and/or
- context information related to the user of the computing device CD being pulled out of social media (like e.g. check-ins, status updates, confirmed events, tags, uploaded pictures and videos, etc.), smart device agenda, to-do lists, weather-forecasts, etc; and/or.
- activity information related to the user of the computing device CD including information on recent phone calls, text messages, mails, pictures, videos, previous used mobile applications, etc; and/or
- statistics on typical user behavior such as activities, e.g. being the flow of subsequent applications used, which applications typically are used, where and at what time of the day or day of the week. These may optionally or additionally also include applications typically being used when a person is surrounded by certain people in a certain situation.

Subsequently, by determining, in function of the retrieved context information, a momentary relevance for each application of a plurality of applications being executable by the computing device CD for each of the applications a momentary relevance is determined and assigned where the applications having the highest momentary relevance are the applications that have the highest probability to be appreciated at the moment by the user of the computing device. Therefore, a set of applications icons for display is generated by selecting the respective application icons corresponding to the applications included in the plurality of applications icons having the highest momentary relevance.

In this way, by including the application icons of applications having a high momentary relevance in the user interface of the computing device CD, a user interface is obtained that optimum presents relevant application icons to the user of the computing device CD.

A further embodiment of the present invention is that said User interface means UIM, further is configured to generate said set of applications icons is by selecting application icons, positioning application icons selected and/or adapting a relative size of said application icons selected in function of said momentary relevance of each application of said plurality of applications.

Hence, based on the momentary relevance of each of the applications, i.e. that is an estimation of the appreciation of each of the applications to be relevant at a certain moment, e.g. at this time, for the user of the computing device, for each of the application whereof the momentary relevance is estimated to be high, the corresponding application icon is selected to be displayed within the user interface, and moreover the shape, the size and the position is determined in order to stress the high momentary relevance.

In this way by generating a user interface including the application icons of applications having a high momentary relevance, a user interface is generated that optimum presents relevant application icons to the user of the computing device CD even more by giving certain application icons included in the user interface having a higher momentary relevance, a more striking shape and/ or size placing and/or positioning the application icon in a manner more striking the eye of the user. Icons of mobile applications most likely to be used can e.g. be shown bigger than others. Icons can also partly occlude each other to make clear to the user that this is a most common order to proceed. Or icons of totally non-important mobile applications can temporally be hidden.

Still a further embodiment of the present invention is that the context information comprises at least one of:
- a context of said computing device;
- a context of a user of said interactive computing device;
- a history of activities/a behavior of said user of said computing device.

The relevant context information for determining a monetary relevance of applications may comprise at least one of:
- a context of the computing device CD such as the GPS location, information on the accelerometer, compass or the smart device's clock;
- a context of a user of said interactive computing device CD such information on the user being pulled out of social media (like e.g. check-ins, status updates, confirmed events, tags, uploaded pictures and videos, etc.), smart device agenda, to-do lists, weather-forecasts, etc;
- a history of activities of said user of said computing device CD such as activity information related to the user of the computing device CD including information on recent phone calls, text messages, mails, pictures, videos, previous used mobile applications, etc; and
- statistics on typical user behavior such as activities, e.g. being the flow of subsequent applications used, which applications typically are used, where and at what time of the day or day of the week. These may optionally or additionally also include applications are typically being used when a person is surrounded by certain people in a certain situation.

Another embodiment of the present invention is that said computing device further comprises a behavior learning means that is configured to determine a behavior of said user of said computing device in function of said context and said processing means, further is configured to determine said momentary relevance of each application of a plurality of applications executable by said computing device in function of said behavior of said user of said computing device.

Additionally, by first determining a behavior of the user of the computing device in function of the context information and subsequently by determining the momentary relevance of each application of a plurality of applications executable by said computing device additionally in function of said behavior the user of the computing device.

The behavior of the user may be a pattern in activities of the user of said computing device that is determined based on the context of the user. The context of the computing device, the context of a user of said interactive computing device and additionally the history of activities of the user of the computing device are analyzed for determining a certain pattern in the activities that match with a certain context.

Further characterizing embodiments of the present Computing Device for displaying a set of application icons are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

### BRIEF DESCRIPTION OF THE DRAWINGS

The above and other objects and features of the invention will become more apparent and the invention itself will be best understood by referring to the following description of an embodiment taken in conjunction with the accompanying drawings wherein:
Fig. 1 represents a functional representation of an embodiment of the Computing Device for displaying a set of application icons are mentioned in the appended claims.
Fig. 2 represents the user interface of a computing device according to an embodiment of the present invention in a first context.
Fig. 3 represents the user interface of a computing device according to an embodiment of the present invention in a second context.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

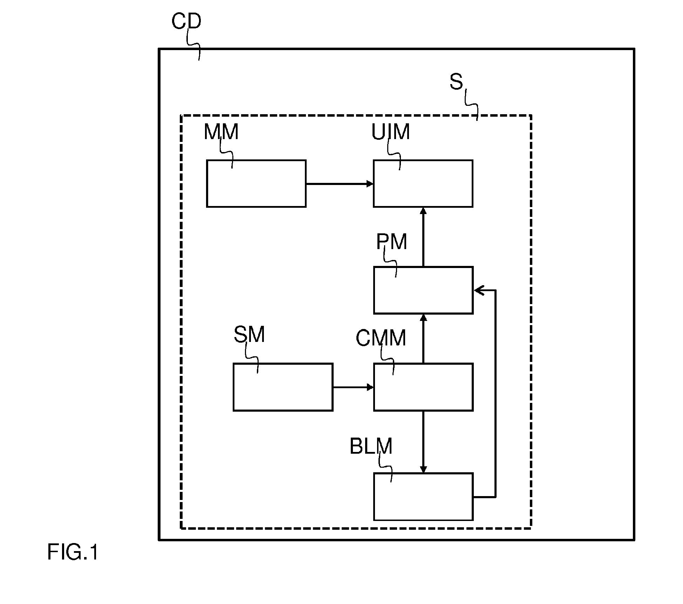

In the following paragraphs, referring to the drawing in FIG.1, an implementation of the computing device according to an embodiment of the present invention is described. In the second paragraph, all connections between the mentioned functional means of the computing device CDI are defined. In the succeeding paragraph the actual execution of the system is described.

A first essential means of the computing device CD of an embodiment of the present invention is a processor (not shown) that controls the execution of all applications that are executable at the computing device and a memory means MM for storing all applications of a plurality of applications A₁,..... A₁₅. The applications executable at the computing device may in an IOS or android case include a photo camera application, a messages applications for SMS, or Whatsapp etc, a web-browser application like Safari, Chrome, Firefox etc., Shazam application, YouTube application, a photo-gallery -, a banking application an application store, a weather application, Foursquare application a pop music event application etc. Furthermore, such computing device CD typically comprises a user interface including a screen for displaying applications being executed and/or application icons that correspond to applications not being active, e.g. being stored in the memory means MM of the computing device CD.

Further, the Computing Device CD comprises a context information management means CMM that is configured to retrieve context information on said computing device and/or on a context of said user of said computing device; and a processing means PM that is configured to determine in function of the retrieved context information, a momentary relevance of each application of a plurality of applications A₁,...,A₁₅ being executable by said computing device and a User interface means UIM that is configured to generate said set of applications icons for display, from said plurality of applications icons in function of said momentary relevance of each application of said plurality of applications. The computing device further comprises a sensing means SM that is configured to physically retrieve all context information: read all sensors included in the computing device CD such as GPS location accelerometer, compass or the smart device's clock, etc

Further, the sensing means SM retrieves the context information of the user of the computing device, where the context of the user is identified by the relevant account (information), such as information pulled out of social media (like e.g. check-ins, status updates, confirmed events, tags, uploaded pictures and videos, etc.), smart device agenda, to-do lists, weather forecasts, etc.

Moreover, the sensing means SM on one hand retrieves User activity information like information about recent phone calls, text messages, mails, pictures, videos, previous used mobile applications, etc and additionally on the other hand collects statistics about typical user behavior/activities such as the flow of applications used, i.e. which applications are typically used where and at what time of the day or day of the week or which applications are typically used when a person is surrounded by what people, and so on. In other words, the sensing means retrieves information on which applications are used depending on the context the user is placed in and/or the context of the computing device.

The computing device CD further comprises a behavior learning means BLM that is configured to determine a behavior of the user of the computing device CD where the behavior of the user may be a pattern in activities of said user of said computing device CD in function of said context.

Such Behavior of the user may be a certain pattern in the activities of such user or a routine of activities of such user, e.g. being a series of activities such user is used to perform in a certain context. Such context may be a work situation or any leisure situation etc.

Moreover the processing means PM, further is configured to determine said momentary relevance of each application of a plurality of applications executable by said computing device in function of said behavior (pattern in activities of the user in a certain context of said user of said computing device CD).

The sensing means SM has an input that is coupled to various local sensors of the computing device, e.g. to the GPS device, an accelerometer, a compass or the smart device's clock, etc. Furthermore the sensing means has a has input terminal that is also an input-terminal of the computing device CD, that is coupled to the internet over any wired connection such as a LAN or wireless connection such as Wi-Fi, Bluetooth, GSM, UMTS etc for retrieving the context of the user of the computing device, such as information pulled out of social media (like e.g. check-ins, status updates, confirmed events, tags, uploaded pictures and videos, etc.), smart device agenda, to-do lists, weather forecasts, etc. The sensing means SM has still a further input that is applied for retrieving User activity information like information about recent phone calls, text messages, mails, pictures, videos, previous used mobile applications.

The sensing means SM further is coupled to the context management means CMM that in turn is coupled to the processing means PM. The processing means PM in turn is coupled to the user interfacing means UIM. The User interfacing means is coupled to the display of the computing device CD.

The context management means CMM further is coupled to the behavior learning means.

Additionally the behavior learning means is coupled to the processing means PM

The memory means MM is coupled to the user interfacing means UIM.

In order to explain the present invention first it is assumed that in a first context the display shows the application icons A₁,..., A10 being respectively A₁: the phone application, A₂: Messages application, A_{3:} the browser application, A₄: music application, A₅: weather application A₆: Calendar application, A₇: the app of a pop music festival, A₈: the foursquare application, A9,: the twitter application, A₁₀: the camera application.

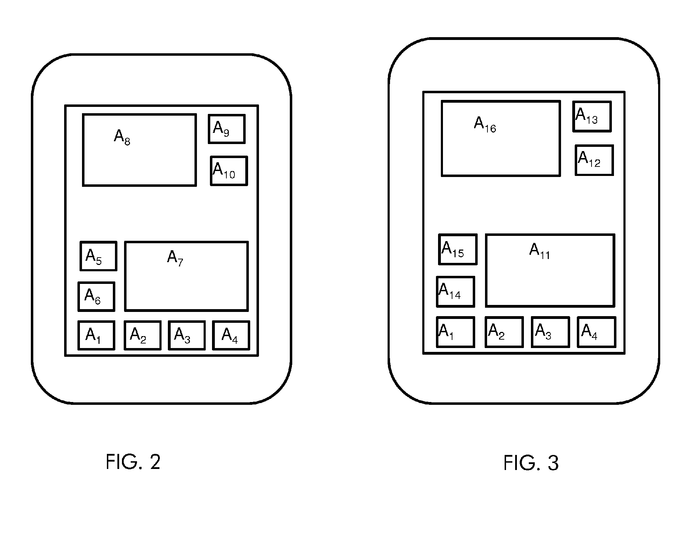

The lay-out of the user interface in this first context is shown in Fig.2.

In the mean time, it is assumed that the sensoring means SM has retrieved agenda information of the user and additionally the Facebook status of the user, both telling that the user is going to visit a pop-music festival today. The context management means CMM retrieves amongst others this information from the censoring means SM. Moreover, the behavior learning means BLM that is configured to determine a behavior, i.e. a pattern in activities, of said user has determined that this user has the habit of checking in with the foursquare application A₈ at each big event such as a pop-music festival as the user always does the check in at the foursquare application at visiting such concerts.

The processing means PM subsequently, in function of the context, i.e. the agenda information of the user and additionally the Facebook status of the user, both telling that the user is going to visit a pop-music festival today together with the information of the behavior learning means BLM, i.e. the habit of the user of checking in with the foursquare application A₈ at each big event such as a pop-music festival as the user always does the check in at the foursquare application at visiting such concerts, determines that a momentary relevance of the foursquare applications is high. Subsequently, the user interface means UIM, generates the set of applications icons for display, from the plurality of applications icons in function of said momentary relevance of each of the applications the set of applications amongst others including the foursquare application. The User interface means UIM first selects this Foursquare application for display at the user interface and additionally positions the Foursquare application icon at the top of the screen and enlarges the Foursquare application icon. In this manner, as the system has learned this behavior, hence shows the foursquare app icon more prominent allowing the user to find back and open the Foursquare application in an easy manner and check in at the Foursquare application. After checking in the Foursquare application, the foursquare status is retrieved by the sensoring means SM. The context management means CMM subsequently retrieves amongst others this information from the censoring means SM, the status change of the Foursquare application. The processing means PM subsequently, in function of the context, i.e. status change of the Foursquare application, determines that the momentary relevance of the foursquare applications has decreased. Subsequently, the user interface means UIM, generates the set of applications icons for display, from the plurality of applications icons in function of said momentary relevance of each of the applications the set of applications amongst others including the foursquare application but the User interface means UIM still may select this Foursquare application for display at the user interface but positioning the Foursquare application icon at a certain location and decreasing the size of the Foursquare application icon. In this manner the system has determined that the momentary relevance of the foursquare application has decreased and therefore the Foursquare icon is displayed less prominent or at a second tab of the user interface as the user probably doesn't need to find back and open the Foursquare application in the near future. Additionally, based on the status change of the Foursquare application the processing means PM subsequently, in function of the context, i.e. status change of the Foursquare application, determines that the momentary relevance of the Shazam music finding application has increased.

Subsequently, the user interface means UIM, generates the set of applications icons for display, from the plurality of applications icons in function of said momentary relevance of each of the applications the set of applications amongst others including the Shazam music finding application. The User interface means UIM first selects this Shazam music finding application for display at the user interface and additionally positioning the Shazam music finding application icon at the bottom of the screen and enlarges the Shazam music finding application icon. In this manner the system has learned this behavior and shows the Shazam music finding application more prominent to allow the user to find back and open the Shazam music finding application in an easy manner at the hearing of a very nice song at the concert without wasting time to find the Shazam music finding application.

This mobile application Shazam is commonly used to search for songs on the web.

An alternative embodiment of the present invention may be the situation wherein a user owns two mobile devices such as a mobile phone like an iPhone and a tablet computer like an iPAD where each device has its own characteristics, e.g. respectively a relative small screen and a relatively large screen. The user further made an Apple user subscription for his iPhone and iPad. The same may be valid in case of two android devices with a Google-account. Moreover it is assumed that in the mean time it is assumed that the sensoring means SM has retrieved GPS location data of the iPhone and determines that this location a children playground is located which location is retrieved by the context management means CMM.

Moreover, the behavior learning means BLM that is configured to determine a behavior, i.e. a pattern in activities, of said user has determined that this user has the habit of taking a lot of pictures if he visits together with his children, the children playground.

The processing means PM subsequently, in function of the context, i.e. GPS location of the iPhone telling that the user currently visits a children playground together with the information of the behavior learning means BLM, i.e. the habit of the user of taking lots of pictures when being at the children playground, determines that a momentary relevance of the photo camera applications is high. Subsequently, the user interface means UIM, generates the set of applications icons for display, at the display of the iPhone, from the plurality of applications wherein the Camera application is position at the top of the display and where the application icon is presented enlarged. In this manner, as the system has learned this behavior, hence shows the Camera application icon more prominent allowing the user to find back and open the Camera application in an easy manner and be able to really fast take pictures of his children playing in the sandpit and the subsequent swinging the swing.

When this user, after playing with his children, leaves, together with his children, the playground the sensing means retrieves the new GPS location and determines that the user's iPhone is not located anymore at the children playground. The context management means CMM subsequently retrieves amongst others this information, i.e. the location of the user's iPhone from the sensoring means SM. The processing means PM subsequently, in function of the context, i.e. moving away from the children playground and subsequently going home, that the momentary relevance of the Camera applications has decreased. Subsequently, the user interface means UIM, generates the set of applications icons for display, from the plurality of applications icons in function of said momentary relevance of each of the applications the set of applications amongst others including the Camera application but the User interface means UIM still may select this Camera application for display at the user interface but positioning the Camera application icon at a certain location and decreasing the size of the Camera application icon. In this manner the system has determined that the momentary relevance of the Camera application has decreased and therefore the camera application icon is displayed less prominent or at a second tab of the user interface as there is a smaller chance that the user needs to find back and open the camera application in the near future.

When arriving at home, the media gallery application indicates that there are new pictures available. But as the behavior learning means BLM, i.e. the habit of the user of taking lots of pictures when being at the children playground, is aware that the user most often does not look at his new pictures at his iPhone due to the small screen. Hence the momentary relevance of the media gallery application stays low and as a consequence of which the User interfacing Means UIM does not change the presentation of the media gallery application icon.

In the mean time it is assumed that the pictures taken at the user's iPhone are synchronized with iCloud over the mobile network or at arrival at home where the synchronization is performed over the Wi-Fi network that connects the iPhone to the iCloud servers for synchronizing the pictures taken in the playground. Moreover it is assumed that at synchronization of the iPhone with iCloud also the user's iPad is synchronized with iCloud so that the pictures of his playing children, taken in the playground are downloaded at the user's iPad.

When arriving at home, the media gallery application of the user's iPad also indicates that there are new pictures available. The behavior learning means BLM, i.e. the habit of the user of taking lots of pictures of his playing children when being at the children playground, is aware that the user most often does look at his new pictures at his iPad due to the nicer screen. Hence the momentary relevance of the media gallery application becomes higher and as a consequence of which the User interfacing Means UIM does change the presentation of the media gallery application icon.

Additionally, based on the status change of the Camera application the processing means PM subsequently, in function of the context, i.e. status change of the

It is to be noted that although in the previous embodiments the relevance of one or a few applications is determined this relevance may be determined for all applications that are in the memory of the device and based on the momentary relevance of each of the applications a ranking may be made based on which ranking the applications are presented in a more or less prominent manner so that for applications with high momentary relevance the icaons are presented more prominently than the icons of applications having a relatively lower momentary relevance.

It is further to be noted that although the embodiments mention mobile computing devices, embodiments of the present invention could include implementations at fixed computing devices like desktop personal computers or laptops.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Computing Device (CD) configured to display a set of application icons included in a user interface of said computing device (CD), said user interface comprising a first set of application icons of a plurality of application icons, each application icon of said plurality of application icons corresponding to an application being executable by said computing device, where said computing device comprises:
- context information management means (CMM), configured to retrieve context information on said computing device and/or on said user of said computing device; and
- processing means (PM), configured to determine in function of said context information, a momentary relevance of each application of a plurality of applications executable by said computing device; and
- User interface means (UIM), configured to generate said set of applications icons for display, and from said plurality of applications icons in function of said momentary relevance of each application of said plurality of applications.

2. Computing Device (CD) according to claim 1, wherein said User interface means (UIM), further is configured to generate said set of applications icons by selecting application icons, positioning application icons selected and/or adapting a relative size of said application icons selected in function of said momentary relevance of each application of said plurality of applications.

3. Computing Device (CD) according to claim 1, wherein said context information comprises at least one of:
- a context of said computing device (CD),
- a context of a user of said interactive computing device (CD),
- a history of activities of said user of said computing device (CD).

4. Computing Device according to claim 3, wherein said computing device (CD) further comprises a behavior learning means (BLM), configured to determine a behavior of said user of said computing device (CD) in function of said context information and said processing means (PM), further is configured to determine said momentary relevance of each application of a plurality of applications executable by said computing device in function of said behavior of said user of said computing device (CD).

5. Method for displaying a set of application icons included in a user interface of a computing device, said user interface comprising said set of application icons of a plurality of application icons, each application icon of said plurality of application icons corresponding to an application being executable by said computing device, where said method comprises the steps of:
- retrieving context information on said computing device and/or on user of said computing device; and
- determining in function of said context information, a momentary relevance of each application of a plurality of applications executable by said computing device; and
- generating said set of applications icons for display, from said plurality of applications icons in function of said momentary relevance of each application of said plurality of applications.

6. Method according to claim 5, wherein said context information comprises at least one of: - context information on said computing device, context information on a user of said interactive computing device, a history of a behavior of said user of said computing device.

7. System for use in a computing device (CD) according to claim 1, said computing device being configured to display a set of application icons included in a user interface of said computing device (CD), said user interface comprising a first set of application icons of a plurality of application icons, each application icon of said plurality of application icons corresponding to an application being executable by said computing device, where system comprises:
- context information management means (CMM), configured to retrieve context information on said computing device and/or on said user of said computing device; and
- processing means (PM), configured to determine in function of said context information, a momentary relevance of each application of a plurality of applications executable by said computing device; and
- User interface means (UIM), configured to generate said set of applications icons for display, and from said plurality of applications icons in function of said momentary relevance of each application of said plurality of applications.

8. system according to claim 7, wherein said User interface means (UIM), further is configured to generate said set of applications icons by selecting application icons, positioning application icons selected and/or adapting a relative size of said application icons selected in function of said momentary relevance of each application of said plurality of applications.

9. System according to claim 1, wherein said context information comprises at least one of:
- a context of said computing device (CD),
- a context of a user of said interactive computing device (CD),
- a history of activities of said user of said computing device (CD).

10. System according to claim 9, wherein said system further comprises a behavior learning means (BLM), configured to determine a behavior of said user of said computing device (CD) in function of said context information and said processing means (PM), further is configured to determine said momentary relevance of each application of a plurality of applications executable by said computing device in function of said behavior of said user of said computing device (CD).
